# EUROPÄISCHE PATENTANMELDUNG

(11) **EP 3 299 168 A2**
(43) Veröffentlichungstag der Anmeldung: **28.03.2018**
(21) Anmeldenummer: 17186496.0
(22) Anmeldetag: 16.08.2017
(51) Int. Cl.: B41F 33/06, B41F 33/16

(54) **VERFAHREN ZUM HERSTELLEN EINES DRUCKPRODUKTS**

(30) Priorität: 22.09.2016 DE 102016117860
(71) Anmelder: manroland web systems GmbH, 86153 Augsburg (DE)
(72) Erfinder: Elchlepp, Andreas, 86551 Aichach (DE); Reismueller, Franz, 86453 Dasing (DE)

(57) **Zusammenfassung**

Verfahren zum Herstellen eines Druckprodukts, beinhaltend die Schritte: Bestimmen in einer vorgegebenen Druckproduktionsanlage aller Anlagenkomponenten und spezifisch für jede Anlagenkomponente eines realisierbaren Produktionsinhalts, welcher eine von der Anlagenkomponente realisierbare Produktionsoperation und Produktionseigenschaften der Anlagenkomponente enthält, Definieren des Druckprodukts hinsichtlich seiner Druckinhalte und seiner physikalischen Beschaffenheit, Bestimmen der zum Herstellen des Druckprodukts erforderlichen Produktionsinhalte auf Basis der Druckinhalte und der physikalischen Beschaffenheit des Druckprodukts, Auswählen von Anlagenkomponenten zum Herstellen des Druckprodukts auf Basis der zum Herstellen des Druckprodukts erforderlichen Produktionsinhalte und der von den Anlagenkomponenten realisierbaren Produktionsinhalte, Zuordnen jedes zum Herstellen des Druckprodukts erforderlichen Produktionsinhalts zu einer ausgewählten Anlagenkomponente, welche den erforderlichen Produktionsinhalt realisieren kann, Bestimmen einer Reihenfolge einer Abarbeitung der zum Herstellen des Druckprodukts erforderlichen Produktionsinhalte, und Abarbeiten der zum Herstellen des Druckprodukts erforderlichen Produktionsinhalte in den ausgewählten Anlagenkomponenten entsprechend der bestimmten Reihenfolge der Abarbeitung. Durch die Erfindung ist eine höhere Effektivität bei der Herstellung des Druckprodukts erzielbar.

## Beschreibung

Die Erfindung betrifft ein Verfahren zum Herstellen eines Druckprodukts in einer vorgegebenen Druckproduktionsanlage.

Nach üblicher Verfahrensweise werden zur Realisierung der Herstellung eines Druckprodukts die Anlagenkomponenten (der Maschinenpark) einer Druckproduktionsanlage nur teilweise und unzusammenhängend in einem Produktionssteuerungssystem abgebildet. Eine vollumfängliche Definition der für die Herstellung des Druckprodukts erforderlichen Anlagenkomponenten sowie die Bestimmung der einzelnen Produktionsoperationen werden in der Regel personell und aus Erfahrungswerten generiert. Ein daraus entstehendes Ausschießschema für das Druckprodukt und die Einstelldaten der an dessen Herstellung beteiligten Anlagenkomponenten werden ebenso aus Vorlagen oder manuellen Eingaben generiert. Dies lässt Raum zur Verbesserung der Effektivität in der Herstellung eines Druckprodukts.

Der Erfindung liegt die Aufgabe zugrunde, ein Verfahren zum Herstellen eines Druckprodukts in einer vorgegebenen Druckproduktionsanlage zu schaffen, mit dem eine höhere Effektivität bei der Herstellung des Druckprodukts erzielbar ist.

Dies wird mit einem Verfahren gemäß Anspruch 1 erreicht. Weiterbildungen der Erfindung sind in den abhängigen Ansprüchen definiert.

Gemäß der Erfindung wird ein Verfahren (im Folgenden Herstellungsverfahren) zum Herstellen eines Druckprodukts bereitgestellt. Das erfindungsgemäße Herstellungsverfahren umfasst zumindest die folgenden Verfahrensschritte: Bestimmen in einer vorgegebenen Druckproduktionsanlage aller Anlagenkomponenten und spezifisch für jede Anlagenkomponente eines realisierbaren Produktionsinhalts, welcher eine oder mehrere von der Anlagenkomponente realisierbare Produktionsoperation(en) und Produktionseigenschaften der Anlagenkomponente enthält, Definieren des Druckprodukts hinsichtlich seiner Druckinhalte (Text, Bilder, Illustrationen usw.) und seiner physikalischen (insbesondere physischen und optischen) Beschaffenheit, Bestimmen der zum Herstellen des Druckprodukts erforderlichen Produktionsinhalte auf Basis der Druckinhalte und der physikalischen Beschaffenheit des Druckprodukts, Auswählen von Anlagenkomponenten der Druckproduktionsanlage zum Herstellen des Druckprodukts auf Basis der zum Herstellen des Druckprodukts erforderlichen Produktionsinhalte und der von den Anlagenkomponenten realisierbaren Produktionsinhalte, Zuordnen jedes zum Herstellen des Druckprodukts erforderlichen Produktionsinhalts zu einer ausgewählten Anlagenkomponente, welche den erforderlichen Produktionsinhalt realisieren kann, Bestimmen einer Reihenfolge einer Abarbeitung der zum Herstellen des Druckprodukts erforderlichen Produktionsinhalte, und Abarbeiten der zum Herstellen des Druckprodukts erforderlichen Produktionsinhalte in den ausgewählten Anlagenkomponenten entsprechend der bestimmten Reihenfolge der Abarbeitung.

Nach dem erfindungsgemäßen Herstellungsverfahren werden alle Anlagenkomponenten der Druckproduktionsanlage erfasst und mit ihrem spezifischen Produktionsinhalt hinsichtlich ihrer jeweils realisierbaren Produktionsoperation(en) und Produktionseigenschaften abgebildet. Außerdem wird das Druckprodukt hinsichtlich seiner Druckinhalte (Text, Bilder, Illustrationen usw.) und seiner physikalischen (insbesondere physischen und optischen) Beschaffenheit vollständig definiert. Dadurch lassen sich nach dem erfindungsgemäßen Herstellungsverfahren die für die Herstellung des Druckprodukts erforderlichen Anlagenkomponenten und Produktionsoperationen in einem Produktionssteuerungssystem rechnergestützt vollumfänglich definieren. In der Folge lassen sich auch ein oder mehrere Ausschießschema(ta) für das Druckprodukt und Einstelldaten der an dessen Herstellung beteiligten Anlagenkomponenten rechnergestützt in dem Produktionssteuerungssystem generieren. Im Ergebnis ist eine höhere Effektivität bei der Herstellung des Druckprodukts erzielbar.

Gemäß einer Ausführungsform des erfindungsgemäßen Herstellungsverfahrens wird die physikalische Beschaffenheit des Druckprodukts so bestimmt, dass sie eine Druckseitenzahl des Druckprodukts, eine seitenspezifische Druckseitengröße des Druckprodukts, eine seitenspezifische Druckseitenanordnung in dem Druckprodukt, eine seitenspezifische Druckqualität des Druckprodukts, eine seitenspezifische Bedruckstoffart des Druckprodukts und eine Bindungs- oder Heftungsart des Druckprodukts umfasst.

Gemäß einer weiteren Ausführungsform des erfindungsgemäßen Herstellungsverfahrens umfasst eine Produktionsoperation zumindest eines von einer Bedruckstoffzuführoperation zum Zuführen eines bogen- oder bahnförmigen Bedruckstoffs, einer Druckoperation zum Aufdrucken eines Druckinhalts des Druckprodukts auf einen bogen- oder bahnförmigen Bedruckstoff, einer Schneidoperation zum Schneiden eines bogen- oder bahnförmigen Bedruckstoffs, einer Falzoperation zum Falzen eines bogen- oder bahnförmigen Bedruckstoffs, einer Sammeloperation zum Sammeln von Druckseiten für das Druckprodukt und einer Verbindungsoperation zum Heften und/oder Binden des Druckprodukts. Ein bogen- oder bahnförmiger Bedruckstoff kann z.B. ein Papierbogen oder eine Papierbahn sein.

Gemäß noch einer Ausführungsform des erfindungsgemäßen Herstellungsverfahrens umfassen die Anlagenkomponenten der Druckproduktionsanlage eine Mehrzahl von Druckkomponenten (z.B. mehrere Druckwerke und/oder mehrere Druckeinheiten) zum jeweiligen Ausführen einer Druckoperation zum Aufdrucken eines Druckinhalts des Druckprodukts auf einen bogen- oder bahnförmigen Bedruckstoff, wobei die Produktionseigenschaften der Druckkomponenten eine Druckqualität, eine Druckgeschwindigkeit und eine Druckinhaltsflexibilität umfassen.

Gemäß noch einer weiteren Ausführungsform des erfindungsgemäßen Herstellungsverfahrens sind die Druckkomponenten so vorgesehen, dass damit mindestens zwei unterschiedliche Drucktechnologien beim Ausführen von Druckoperationen zum Aufdrucken von Druckinhalten des Druckprodukts realisierbar sind, wobei das Druckprodukt so definiert wird, dass zur Herstellung dessen die Ausführung der mindestens zwei unterschiedlichen Drucktechnologien erforderlich ist.

Gemäß einer Ausführungsform des erfindungsgemäßen Herstellungsverfahrens umfassen die unterschiedlichen Drucktechnologien mindestens zwei Drucktechnologien von einem Coldset-Offsetdruckverfahren (wie im Zeitungsdruck angewendet), einem Heatset-Offsetdruckverfahren (wie im Illustrationsdruck angewendet), einem Hochdruckverfahren, einem Tiefdruckverfahren (wie beispielsweise im extrem hochauflagigen Druck verwendet), einem Flexodruckverfahren (wie beispielsweise teilweise noch im Zeitungsdruck oder im Kartonage-Druck angewendet) und einem oder mehreren Digitaldruckverfahren. Bevorzugt umfassen die Digitaldruckverfahren ein Elektrografie-Druckverfahren bzw. Laserdruckverfahren und ein Tintenstrahl-Druckverfahren bzw. InkjetDruckverfahren. Diese Druckverfahren unterscheiden sich teils beträchtlich in ihren Produktionseigenschaften wie Druckqualität, Druckgeschwindigkeit und/oder Druckinhaltsflexibilität. So weisen z.B. die Offsetdruckverfahren eine hohe Druckqualität und Druckgeschwindigkeit auf, haben aber eine geringe Druckinhaltsflexibilität. Im Gegensatz dazu weisen die Digitaldruckverfahren eine hohe Druckinhaltsflexibilität auf, bieten aber in der Regel eine geringere Druckqualität und/oder Druckgeschwindigkeit.

Gemäß einer weiteren Ausführungsform des erfindungsgemäßen Herstellungsverfahrens wird beim Zuordnen der zum Herstellen des Druckprodukts erforderlichen Produktionsinhalte zu den ausgewählten Anlagenkomponenten eine prozentuale Aufteilung der auszuführenden Druckoperationen auf die mindestens zwei unterschiedlichen Drucktechnologien durchgeführt.

Gemäß noch einer Ausführungsform des erfindungsgemäßen Herstellungsverfahrens wird für jede der mindestens zwei unterschiedlichen Drucktechnologien eine örtliche Platzierung der damit zu druckenden Druckinhalte auf einem Bedruckstoff bestimmt, wobei das Abarbeiten der zum Herstellen des Druckprodukts erforderlichen Produktionsinhalte in den Druckkomponenten der ausgewählten Anlagenkomponenten entsprechend bzw. unter Berücksichtigung der bestimmten örtlichen Platzierung der mit den mindestens zwei unterschiedlichen Drucktechnologien zu druckenden Druckinhalte durchgeführt wird.

Gemäß noch einer weiteren Ausführungsform des erfindungsgemäßen Herstellungsverfahrens werden den auszuführenden Druckoperationen nachgelagerte Produktionsoperationen auf Basis der Definition des Druckprodukts, der ausgewählten Anlagenkomponenten und der bestimmten Reihenfolge der Abarbeitung parametriert.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform detaillierter beschrieben werden.

Gemäß der bevorzugten Ausführungsform der Erfindung wird das Herstellungsverfahren zum Herstellen eines Druckprodukts in einer vorgegebenen Druckproduktionsanlage durchgeführt, welche ein rechnergestütztes Produktionssteuerungssystem aufweist. Die Druckproduktionsanlage basiert bevorzugt auf einer Rotations-Offsetdruckmaschine wie einer Rollenrotationsdruckmaschine oder einer Bogendruckmaschine. Demgemäß kann ein Bedruckstoff zur Herstellung des Druckprodukts ein bogen- oder bahnförmiger Bedruckstoff, insbesondere ein Papierbogen oder eine Papierbahn sein. In der bevorzugten Ausführungsform der Erfindung basiert die Druckproduktionsanlage auf einer Rollenrotationsdruckmaschine und ist der Bedruckstoff bevorzugt als Papierbahn vorgesehen.

Anlagenkomponenten der Druckproduktionsanlage umfassen demgemäß u.a. ein oder mehrere Bedruckstoffzuführkomponenten wie (Papier-) Rollenwechsler, mehrere Druckkomponenten (z.B. mehrere Druckwerke und/oder mehrere Druckeinheiten), ein oder mehrere Schneidkomponenten wie Längs- und Querschneideinrichtungen, ein oder mehrere Falzkomponenten wie Falztrichter und Falzapparate, ein oder mehrere Sammelkomponenten und ein oder mehrere Heft- und/oder Bindekomponenten.

Nach dem erfindungsgemäßen Herstellungsverfahren werden mittels des Produktionssteuerungssystems alle Anlagenkomponenten der Druckproduktionsanlage und spezifisch für jede Anlagenkomponente ein realisierbarer Produktionsinhalt, welcher eine oder mehrere von der Anlagenkomponente realisierbare Produktionsoperation(en) und Produktionseigenschaften der Anlagenkomponente enthält, bestimmt. In der bevorzugten Ausführungsform der Erfindung umfassen die Produktionseigenschaften der Druckkomponenten insbesondere eine Druckqualität, eine Druckgeschwindigkeit und eine Druckinhaltsflexibilität der Druckkomponenten.

Nach dem erfindungsgemäßen Herstellungsverfahren wird mittels des Produktionssteuerungssystems außerdem das herzustellende Druckprodukt hinsichtlich seiner Druckinhalte (Text, Bilder, Illustrationen usw.) und seiner physikalischen (insbesondere physischen und optischen) Beschaffenheit genau definiert. In der bevorzugten Ausführungsform der Erfindung wird die physikalische Beschaffenheit des Druckprodukts so definiert, dass sie eine Druckseitenzahl des Druckprodukts, eine seitenspezifische Druckseitengröße des Druckprodukts, eine seitenspezifische Druckseitenanordnung in dem Druckprodukt, eine seitenspezifische Druckqualität des Druckprodukts, eine seitenspezifische Bedruckstoffart des Druckprodukts und eine Bindungs- oder Heftungsart des Druckprodukts umfasst. Außerdem wird das Druckprodukt hinsichtlich seiner physikalischen Beschaffenheit insbesondere so definiert, dass zur Herstellung dessen die Ausführung mindestens zweier unterschiedlicher Drucktechnologien erforderlich ist.

Demgemäß sind in der bevorzugten Ausführungsform der Erfindung die Druckkomponenten der Anlagenkomponenten der Druckproduktionsanlage so vorgesehen, dass damit die mindestens zwei unterschiedlichen Drucktechnologien beim Ausführen von Druckoperationen zum Aufdrucken von Druckinhalten des Druckprodukts realisierbar sind. Somit ist die Druckproduktionsanlage bevorzugt als eine sogenannte hybride Druckproduktionsanlage ausgeführt.

Die unterschiedlichen Drucktechnologien umfassen bevorzugt mindestens zwei Drucktechnologien von einem Coldset-Offsetdruckverfahren (wie im Zeitungsdruck angewendet), einem Heatset-Offsetdruckverfahren (wie im Illustrationsdruck angewendet), einem Hochdruckverfahren, einem Tiefdruckverfahren (wie beispielsweise im extrem hochauflagigen Druck verwendet), einem Flexodruckverfahren (wie beispielsweise teilweise noch im Zeitungsdruck oder im Kartonage-Druck angewendet) und einem oder mehreren Digitaldruckverfahren. Bevorzugt umfassen die Digitaldruckverfahren ein Elektrofotografie-Druckverfahren bzw. Laserdruckverfahren und ein Tintenstrahl-Druckverfahren bzw. Inkjetdruckverfahren. Das Coldset-Offsetdruckverfahren, das Heatset-Offsetdruckverfahren, das Hochdruckverfahren, das Tiefdruckverfahren oder das Flexodruckverfahren werden auch aufgrund der während des Druckprozesses nicht veränderlichen Druckform auch als Nicht-Druckform-variable Druckverfahren bezeichnet, im Gegensatz zu den auch als Druckform-variabel bezeichneten Digitaldruckverfahren.

Nach dem erfindungsgemäßen Herstellungsverfahren werden auf Basis der definierten Druckinhalte und physikalischen Beschaffenheit des Druckprodukts mittels des Produktionssteuerungssystems die zum Herstellen des Druckprodukts erforderlichen Produktionsinhalte, d.h. Produktionsoperationen und Produktionseigenschaften, bestimmt. In der bevorzugten Ausführungsform der Erfindung beinhalten die Produktionsoperationen zumindest eine Bedruckstoffzuführoperation (mittels einer Bedruckstoffzuführkomponente) zum Zuführen eines wie o.g. Bedruckstoffs, eine Druckoperation (mittels einer Druckkomponente) zum Aufdrucken eines Druckinhalts des Druckprodukts auf einen wie o.g. Bedruckstoff, eine Schneidoperation (mittels einer Schneidkomponente) zum Schneiden eines wie o.g. Bedruckstoffs, eine Falzoperation (mittels einer Falzkomponente) zum Falzen eines wie o.g. Bedruckstoffs, eine Sammeloperation (mittels einer Sammelkomponente) zum Sammeln von Druckseiten für das Druckprodukt und eine Verbindungsoperation (mittels einer Heft- und/oder Bindekomponente) zum Heften und/oder Binden des Druckprodukts.

Nach dem erfindungsgemäßen Herstellungsverfahren werden mittels des Produktionssteuerungssystems Anlagenkomponenten der Druckproduktionsanlage zum Herstellen des Druckprodukts auf Basis der zum Herstellen des Druckprodukts erforderlichen Produktionsinhalte und der von den Anlagenkomponenten realisierbaren Produktionsinhalte ausgewählt. Als Nächstes wird von dem Produktionssteuerungssystem jeder zum Herstellen des Druckprodukts erforderliche Produktionsinhalt zu einer ausgewählten Anlagenkomponente, welche den erforderlichen Produktionsinhalt realisieren kann, zugeordnet. In der bevorzugten Ausführungsform der Erfindung wird beim Zuordnen der zum Herstellen des Druckprodukts erforderlichen Produktionsinhalte zu den ausgewählten Druckkomponenten der Anlagenkomponenten eine prozentuale Aufteilung der auszuführenden Druckoperationen auf die mindestens zwei unterschiedlichen Drucktechnologien durchgeführt. Außerdem wird in der bevorzugten Ausführungsform der Erfindung mittels des Produktionssteuerungssystems für jede der mindestens zwei unterschiedlichen Drucktechnologien eine örtliche Platzierung der damit zu druckenden Druckinhalte auf einem Bedruckstoff bestimmt.

Nach dem erfindungsgemäßen Herstellungsverfahren wird mittels des Produktionssteuerungssystems eine Reihenfolge einer Abarbeitung der zum Herstellen des Druckprodukts erforderlichen Produktionsinhalte bestimmt. Dann werden gesteuert durch das Produktionssteuerungssystem die zum Herstellen des Druckprodukts erforderlichen Produktionsinhalte in den ausgewählten Anlagenkomponenten der Druckproduktionsanlage entsprechend der bestimmten Abarbeitungsreihenfolge abgearbeitet. Dabei wird das Abarbeiten der zum Herstellen des Druckprodukts erforderlichen Produktionsinhalte in den Druckkomponenten der ausgewählten Anlagenkomponenten entsprechend bzw. unter Berücksichtigung der bestimmten örtlichen Platzierung der mit den mindestens zwei unterschiedlichen Drucktechnologien zu druckenden Druckinhalte durchgeführt.

Schließlich werden nach dem erfindungsgemäßen Herstellungsverfahren den auszuführenden Druckoperationen nachgelagerte Produktionsoperationen auf Basis der Definition des Druckprodukts, der ausgewählten Anlagenkomponenten und der bestimmten Reihenfolge der Abarbeitung parametriert. Insbesondere kann durch die Produktdefinition in Verbindung mit der Kenntnis der beteiligten Anlagenkomponenten und der Produktionsabläufe eine solche Parametrierung z.B. für Produktionsoperationen bzw. Produktionsschritte wie eine Klebebindung und/oder eine Heftung des Druckprodukts und logistische Prozesse wie Abstapeln, Palettierung des Druckprodukts und dergleichen durgeführt werden. Weiterhin können vor- und nachgelagerte Gegebenheiten berücksichtigt werden, wie z.B. vorrätige Bedruckstoffbreiten und Bedruckstoffsorten und nachgelagerte logistische oder kaufmännische Prozesse.

Nach dem erfindungsgemäßen Herstellungsverfahren kann über die gesamte Druckproduktionsanlage oder auch mehrere Druckproduktionsanlagen hinweg in Form der erforderlichen Produktionsinhalte erfasst werden, welche Produktionsoperationen mit ihren spezifischen Produktionseigenschaften an der Druckproduktbildung beteiligt sind. Dabei bedient sich das Herstellungsverfahren der Kenntnis des zu produzierenden Druckproduktes mit ggf. allen Teilprodukten. Mit der Kenntnis aller erforderlichen Produktionsinhalte kann nun speziell bei hybriden Druckproduktionsanlagen genau bestimmt werden, wie und wo welcher Teil der Druckinhalte des Druckproduktes auf den Bedruckstoff aufgebracht wird.

Genauer ausgedrückt kann nach dem erfindungsgemäßen Herstellungsverfahren, insbesondere bei einem Maschinenpark, welcher aus gemischten bzw. hybriden Anlagenkomponenten wie Druckkomponenten besteht, eine vom zu erzielenden Druckprodukt ausgehende Definition des Produktionsszenarios bzw. Produktionsablaufs erreicht werden. Dabei wird insbesondere sichergestellt, dass ein optimaler Produktionsablauf - speziell hinsichtlich des Einsatzes von verschiedenen Produktionstechnologien mit ihren jeweiligen Produktionseigenschaften - realisiert wird. Nach dem erfindungsgemäßen Herstellungsverfahren kann nach der Bestimmung der zum Herstellen des Druckprodukts erforderlichen Produktionsinhalte eine exakte Berechnung der verschiedenen Belegungen der Druckkomponenten (z.B. jeweiliger Anteil von Digitaldruck und Offsetdruck) erfolgen und können Ausschießschemata für alle beteiligten Anlagenkomponenten und für alle Druckproduktteile abgestimmt auf das zu erzielende Druckprodukt erstellt werden. Außerdem kann eine Parametrierung der nachgelagerten Weiterverarbeitung erfolgen.

## Patentansprüche

1. Verfahren zum Herstellen eines Druckprodukts, aufweisend:
Bestimmen in einer vorgegebenen Druckproduktionsanlage aller Anlagenkomponenten und spezifisch für jede Anlagenkomponente eines realisierbaren Produktionsinhalts, welcher eine von der Anlagenkomponente realisierbare Produktionsoperation und Produktionseigenschaften der Anlagenkomponente enthält,
Definieren des Druckprodukts hinsichtlich seiner Druckinhalte und seiner physikalischen Beschaffenheit,
Bestimmen der zum Herstellen des Druckprodukts erforderlichen Produktionsinhalte auf Basis der Druckinhalte und der physikalischen Beschaffenheit des Druckprodukts,
Auswählen von Anlagenkomponenten zum Herstellen des Druckprodukts auf Basis der zum Herstellen des Druckprodukts erforderlichen Produktionsinhalte und der von den Anlagenkomponenten realisierbaren Produktionsinhalte,
Zuordnen jedes zum Herstellen des Druckprodukts erforderlichen Produktionsinhalts zu einer ausgewählten Anlagenkomponente, welche den erforderlichen Produktionsinhalt realisieren kann,
Bestimmen einer Reihenfolge einer Abarbeitung der zum Herstellen des Druckprodukts erforderlichen Produktionsinhalte, und
Abarbeiten der zum Herstellen des Druckprodukts erforderlichen Produktionsinhalte in den ausgewählten Anlagenkomponenten entsprechend der bestimmten Reihenfolge der Abarbeitung.

2. Verfahren gemäß Anspruch 1, wobei die physikalische Beschaffenheit des Druckprodukts so bestimmt wird, dass sie eine Druckseitenzahl, eine seitenspezifische Druckseitengröße, eine seitenspezifische Druckseitenanordnung, eine seitenspezifische Druckqualität, eine seitenspezifische Bedruckstoffart und eine Bindungs- oder Heftungsart umfasst.

3. Verfahren gemäß Anspruch 1 oder 2, wobei eine Produktionsoperation zumindest eines von einer Bedruckstoffzuführoperation zum Zuführen eines bogen- oder bahnförmigen Bedruckstoffs, einer Druckoperation zum Aufdrucken eines Druckinhalts des Druckprodukts auf einen bogen- oder bahnförmigen Bedruckstoff, einer Schneidoperation zum Schneiden eines bogen- oder bahnförmigen Bedruckstoffs, einer Falzoperation zum Falzen eines bogen- oder bahnförmigen Bedruckstoffs, einer Sammeloperation zum Sammeln von Druckseiten für das Druckprodukt und einer Verbindungsoperation zum Heften und/oder Binden des Druckprodukts umfasst.

4. Verfahren gemäß einem der Ansprüche 1 bis 3, wobei die Anlagenkomponenten eine Mehrzahl von Druckkomponenten zum jeweiligen Ausführen einer Druckoperation zum Aufdrucken eines Druckinhalts des Druckprodukts auf einen bogen- oder bahnförmigen Bedruckstoff umfassen, und wobei die Produktionseigenschaften der Druckkomponenten eine Druckqualität, eine Druckgeschwindigkeit und eine Druckinhaltsflexibilität umfassen.

5. Verfahren gemäß Anspruch 4, wobei die Druckkomponenten so vorgesehen sind, dass damit mindestens zwei unterschiedliche Drucktechnologien beim Ausführen von Druckoperationen zum Aufdrucken von Druckinhalten des Druckprodukts realisierbar sind, und wobei das Druckprodukt so definiert wird, dass zur Herstellung dessen die Ausführung der mindestens zwei unterschiedlichen Drucktechnologien erforderlich ist.

6. Verfahren gemäß Anspruch 5, wobei die unterschiedlichen Drucktechnologien mindestens zwei Drucktechnologien von einem Coldset-Offsetdruckverfahren, einem Heatset-Offsetdruckverfahren, einem Hochdruckverfahren, einen Tiefdruckverfahren, einem Flexo-Druckverfahren und Digitaldruckverfahren umfassen.

7. Verfahren gemäß Anspruch 6, wobei die Digitaldruckverfahren ein Elektrofotografie-Druckverfahren und ein Tintenstrahl-Druckverfahren umfassen.

8. Verfahren gemäß einem der Ansprüche 5 bis 7, wobei beim Zuordnen der zum Herstellen des Druckprodukts erforderlichen Produktionsinhalte zu den ausgewählten Anlagenkomponenten eine prozentuale Aufteilung der auszuführenden Druckoperationen auf die mindestens zwei unterschiedlichen Drucktechnologien durchgeführt wird.

9. Verfahren gemäß einem der Ansprüche 5 bis 8, wobei für jede der mindestens zwei unterschiedlichen Drucktechnologien eine örtliche Platzierung der damit zu druckenden Druckinhalte auf einem Bedruckstoff bestimmt wird, und wobei das Abarbeiten der zum Herstellen des Druckprodukts erforderlichen Produktionsinhalte in den Druckkomponenten der ausgewählten Anlagenkomponenten entsprechend der bestimmten örtlichen Platzierung der mit den mindestens zwei unterschiedlichen Drucktechnologien zu druckenden Druckinhalte durchgeführt wird.

10. Verfahren gemäß einem der Ansprüche 5 bis 9, wobei den auszuführenden Druckoperationen nachgelagerte Produktionsoperationen auf Basis der Definition des Druckprodukts, der ausgewählten Anlagenkomponenten und der bestimmten Reihenfolge der Abarbeitung parametriert werden.
